# EUROPÄISCHE PATENTSCHRIFT

(11) **EP 3 164 302 B1**
(45) Veröffentlichungstag und Bekanntmachung des Hinweises auf die Patenterteilung: **07.11.2018**
(21) Anmeldenummer: 15821023.7
(22) Anmeldetag: 23.12.2015
(51) Int. Cl.: B60R 21/215

(54) **VERBUNDWERKSTOFF FÜR EINE AIRBAGABDECKUNG**
COMPOSITE MATERIAL FOR AN AIRBAG COVER
MATÉRIAU COMPOSITE POUR CACHE DE SAC GONFLABLE

(30) Priorität: 30.01.2015 DE 102015001103
(43) Veröffentlichungstag der Anmeldung: 10.05.2017
(73) Patentinhaber: K.L. Kaschier- und Laminier GmbH, 48455 Bad Bentheim-Gildehaus (DE)
(72) Erfinder: HÖING, Maik, 48712 Gescher (DE); RORING, Albert, 48599 Gronau-Epe (DE); SCHULZE WEHNINCK, Rembert, 82327 Tutzing (DE)
(74) Vertreter: Cohausz Hannig Borkowski Wißgott
(86) Internationale Anmeldenummer: PCT/EP2015/002611
(87) Internationale Veröffentlichungsnummer: WO 2016/119810

(56) Entgegenhaltungen:
- EP-A1- 2 727 775
- EP-A2- 2 113 428
- DE-A1-102009 048 686
- DE-U1-202007 016 718
- FR-A1- 2 902 727

## Beschreibung

Die Erfindung betrifft einen Verbundwerkstoff als Flachmaterial mit mindestens einer textilen Schicht für die Abdeckung eines Airbags, wobei die Abdeckung mindestens eine Klappe mit Scharnier bildet.

Es sind Airbag-Abdeckungen aus Kunststoff bekannt, die eine oder zwei Klappen bilden, die jeweils an drei Rändern Sollbruchlinien besitzen und nach Auslösen des Airbags dort aufreißen und an dem vierten Rand ein Scharnier bilden, um das die Klappe verschwenkt, ohne dort abzureißen, so dass sichergestellt ist, dass die Klappe nicht in den Innenraum des Kraftfahrzeugs fliegt. Dieser sichere Halt der Klappe im Bereich des Scharniers wird durch zusätzliche, nicht reißende Fäden im Scharnierbereich erreicht, wie dies aus der EP 2 057 044 bekannt ist.

Ferner ist es aus der DE 10 2012 021 315 A1 bekannt, das Scharnier einer Airbag-Abdeckungsklappe mit einer Falte/Faltung bzw. Schlaufe zu versehen, die beim Öffnen des Scharniers sich auseinander faltet und damit einen zusätzlichen Weg für die Klappe freigibt. Diese Technologie wird vor allem beim Einsatz von textilen Flächen wie Geweben (z. B. Aramide oder Polyester) genutzt, um die im Armaturenbrett eingebrachte Schichtdicke, bedingt durch Trägermasse, Abstandsmedium (beispielsweise Schaum oder Abstandsgestrick, o.ä.) und dem Dekormaterial, beim Öffnen des Airbags zu überbrücken, so dass die Klappe weit genug öffnet, dass der Airbag sich komplett und störungsfrei entfalten kann, ohne dass die Klappe sich löst. Das Einbringen der Schlaufe erfolgt in der Regel beim Spritzprozess selber durch Schieber, die nach dem Einlegen des umgeformten Materials in die Spritzgussform die Schlaufe bilden.

Dieser Prozessschritt ist kompliziert und risikobehaftet, so dass als Alternative das Einbringen der Schlaufe in einem vorgeschalteten Prozess mit mehreren Einzelschritten erfolgt. Hierbei muss die Schlaufe durch ein zusätzliches Haltesystem (beispielsweise Kleber oder Naht) fixiert werden. Auch dieses Prinzip ist mittlerweile Stand der Technik. Dieser Prozess ist aber zeitaufwändig und durch mehrere Arbeitsschritte teuer.

Aus der EP 2 727 775 A1 ist eine Airbag-Abdeckung gemäß dem Oberbegriff vom Anspruch 1 bekannt.

Aufgabe der Erfindung ist es, einen Verbundwerkstoff für die Abdeckung eines Airbags bei geringem Herstellungsaufwand und optimaler Werkstoffwahl zu schaffen, bei dem die im Bereich des Klappenscharniers befindliche Faltung beim Spritzgussprozess dagegen gesichert ist, dass Schmelzmasse in die Faltung bzw. Schlaufe gelangen kann, wobei ein Anschmelzen an die Oberfläche des Verbundwerkstoffes begrenzt wird.

Diese Aufgabe wird erfindungsgemäß durch eine Airbag-Abdeckung mit den Merkmalen des Anspruchs 1 gelöst.

Die Erfindung betrifft die Verklebung der Faltung/Schlaufe mit sich selbst durch eine auf der Oberfläche angebrachte Beschichtung insbesondere Folie (aus thermoplastischem Material), die durch Wärmezufuhr angeschmolzen wird und durch seitlichen Druck auf die Schlaufe miteinander verklebt und dadurch die eingebrachte Faltung/Schlaufe in Position hält, ohne zusätzliche Arbeitsschritte. Alle erforderlichen Arbeitsschritte erfolgen während der Herstellung der Faltung/Schlaufe.

Besonders geeignet ist dieses Verfahren beim Einsatz von thermoplastischen Verbundwerkstoffen als Airbag-Scharnier (beispielsweise eigenverstärkten Verbundwerkstoffen auf Basis Polypropylen), die für den (Falt-) Umformprozess erwärmt werden müssen und durch Zusammendrücken der Faltung/Schlaufe diese miteinander verklebt. Hierbei wird die Faltung/Schlaufe mit dem auf der Oberfläche befindlichen flächigen Material, das sich auf der gesamten Materialoberfläche befindet, in dem Bereich der Faltung/Schlaufe miteinander verklebt, wodurch die Position der Faltung/Schlaufe und die Faltungstiefe/Schlaufentiefe fixiert sind.

Dadurch kann beim Hinterspitzprozess keine Schmelzgussmasse in die Schlaufe gelangen, wodurch die Funktion der Schlaufe optimal gegeben ist. Würde beim Spritzgussprozess die Schmelzmasse in die Schlaufe gelangen, ist die Gefahr von Partikelflug und Fehlfunktionen der Schlaufe sehr hoch und nicht kontrollierbar. Auch eine Abdichtung der Werkzeuge ist nicht mehr erforderlich.

Vorteilhafte Ausgestaltungen der Erfindung sind in den Unteransprüchen aufgeführt.

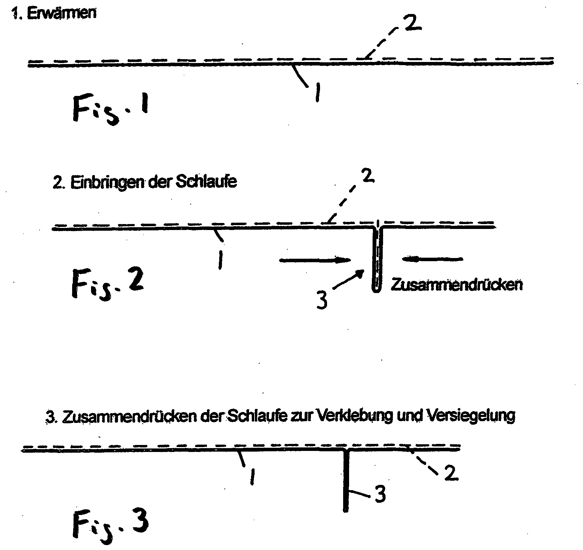

Ein Ausführungsbeispiel der Erfindung ist in den Zeichnungen schematisch in Schnitten dargestellt und wird im Folgenden incl. Alternativen näher beschrieben. Es zeigen
- Fig. 1: den erwärmten Verbundwerkstoff mit einseitig aufgebrachter Beschichtung insbesondere Folie vor Einbringen der Faltung/Schlaufe,
- Fig. 2: den erwärmten Verbundwerkstoff mit eingebrachter Faltung/Schlaufe,
- Fig. 3: den erwärmten Verbundwerkstoff nach dem Zusammendrücken/Pressen der Faltung/Schlaufe.

Die Aribag-Abdeckung wird von einem starren und/oder steifen, plattenförmigen oder bahnförmigen Kunststoffmaterial gebildet und ist damit ein relativ dünner, flacher, ebener, fester Gegenstand mit überall gleicher Dicke und begrenzter Elastizität (im Gegensatz zu einer Folie).

Die Airbag-Abdeckung besteht hierbei aus einem thermoplastischen KunststoffMaterial insbesondere aus thermoplastischen Polypropylen (PP). Das Material ist ein plattenförmiger eigenverstärkter Verbundwerkstoff 1 (Compound/Composite), wobei sich homogene Polypropylen-, copolymere Polyolefin-, homogene Polyester-, oder copolymere Polyesterfolien mit weiteren Verstärkungslagen abwechseln, die aus Polypropylen-, bzw. Polyester-Bändern bestehen, oder solche aufweisen. Hierbei bilden die Bänder eine dünne Schicht, in denen die Bänder entweder geordnet liegen insbesondere wie ein Gewebe gelegt oder verwebt sind, oder sie liegen ungeordnet kreuz und quer. In allen Fällen wird im Folgenden von einer "Gewebeschicht" gesprochen. Die Folien-Lagen und die Bänder-Lagen (Verstärkungslagen) wechseln einander ab und die Gesamtanzahl der Bänder-Lagen beträgt mindestens zwei insbesondere drei bis acht Lagen insbesondere drei bis acht Lagen bei einer Gesamtdicke von 0,4 mm bis 2 mm insbesondere von 0,8 bis 1 mm. Unter Druck und Zufuhr von Wärme verschmelzen alle Schichten zu einem einzigen flachen Material vorzugsweise zu einer Platte, die nur aus Polypropylen-, bzw. Polyester-Schichten besteht.

Die weiteren zwischen oder auf den Folien-Lagen befindlichen Verstärkungslagen weisen in alternativen Ausführungen statt der Bänder Fasern oder Fäden auf, die wiederum aus Polypropylen-, bzw. Polyester-Folien bestehen und geordnet (auch als Gewebe) oder ungeordnet angeordnet sind.

Die Oberseite und/oder die Unterseite des Verbundwerkstoffs 1 ist mit einer Beschichtung 2 versehen insbesondere mit einer thermoplastischen Folie insbesondere aus Polyester oder Polypropylen oder copolymeren Polyolefin kaschiert.

In den plattenförmigen Verbundwerkstoff 1 werden später eine oder zwei Klappen, die den Airbag bedecken, in der Weise eingebracht, dass innerhalb des Verbundwerkstoffs an drei Rändern jeder Klappe Sollbruchlinien angeordnet werden, die die gesamte Platte durchdringen und nach dem Auslösen des Airbags die Klappe freigeben. An dem vierten Rand befindet sich ein länglicher Scharnierbereich, um den die Klappe nach dem Auslösen verschwenkt ohne abzureißen.

Die Sicherheit gegen ein Abreißen wird dadurch erreicht, dass im Bereich des Scharniers in den Verbundwerkstoff 1 mindestens eine Falte/Faltung/Schlaufe 3 oder eine Rinne eingeformt wird, die längs der Scharnierlängserstreckung bzw. des Klappenrandes im Scharnier verläuft und dadurch eine zusätzliche Materiallänge quer zur Scharnierlängserstreckung erzeugt. Diese zusätzliche Materiallänge im Scharnierbereich gewährt genügend Weglänge beim Verschwenken der Klappe um das Scharnier, so dass sichergestellt ist, dass die Klappe nicht abreißt.

Zum Erzeugen der Faltung (3), Falte(n), Schlaufe wird vorzugsweise ein erwärmtes Schwert (heißes Schwert) verwendet, das in den Verbundwerkstoff im Bereich des Scharniers hineingedrückt wird und hierbei das thermoplastische Material verformt, wobei das Material zusätzlich vor der Verformung vorzugsweise partiell oder vollflächig erhitzt wird.

Der Verbundwerkstoff 1 insbesondere die textile Schicht insbesondere in Form einer Gewebeschicht ist ein- oder zweiseitig mit einer Kunststoff-Beschichtung 2 insbesondere mit einer Folie beschichtet, die auf der Oberfläche des Verbundwerkstoffs insbesondere der textilen Schicht fest haftet. Die Kunststoff-Beschichtung insbesondere die Folie weist eine Dicke von 0,02 bis 0,1 mm vorzugsweise von 0,03 bis 0,06 mm auf.

Hierbei weist die Kunststoff-Beschichtung 2 einen niedrigeren Schmelzpunkt auf als der des Verbundwerkstoffs 1 oder der der textilen Schicht(en). Vorzugsweise schmilzt der Kunststoff der Beschichtung oder ein Teil der Beschichtung bereits unter 160° Celsius vorzugsweise bei 125° bis 155° Celsius und der Kunststoff des Gewebes über 160° Celsius vorzugsweise ab 165° Celsius.

Im Scharnierbereich ist in den Verbundwerkstoff 1 längs des Scharniers eine einfache Faltung 3 (V-Faltung) oder eine zweifache Faltung (N-Faltung) eingebracht. Bei der einfachen Faltung ist dafür gesorgt, dass die Beschichtung 2 innerhalb der Faltung/Falte sich befindet, so dass die Innenflächen innerhalb der Faltung/Falte mit ihrer Beschichtung aufeinanderliegen. Wird dagegen die zweifache Faltung gewählt, so sind beide Außenflächen des Verbundwerkstoffs mit einer Beschichtung/Folie versehen.

Vor dem Einbringen der Falte wird das Material auf 125° bis 155°C erwärmt und damit auf eine Temperatur, wo das Material verformt werden kann und die innenliegenden Oberflächen miteinander verkleben können, so dass die Beschichtung aber nicht der Verbundwerkstoff/das übrige Flachmaterial schmilzt. Hierdurch schmelzen die Faltflächen aneinander und nach der Abkühlung ist eine Falte/Faltung entstanden, die keinen freien Zwischenraum mehr aufweist, in die beim späteren Spritzguss keine Spritzgussmasse hineingelangen kann.

Auch ist durch die bestimmte Wahl des Beschichtungsmaterials oder des Folienmaterials gewährleistet, dass nach dem Auslösen des Airbags und beim Aufreißen und Verschwenken der Airbagklappe die Falte/Faltung/Schlaufe mit Sicherheit aufreißt, um der Klappe zusätzlichen Weg zu geben.

Für das Beschichtungsmaterial insbesondere für das Folienmaterial wird vorzugsweise Polypropylen, copolymeren Polyolefin oder Polyester verwendet.

## Patentansprüche

1. Airbag-Abdeckung, die aus einem Verbundwerkstoff (1) als Flachmaterial mit mindestens einer textilen Schicht besteht, wobei die Abdeckung mindestens eine Klappe mit Scharnier bildet,
- wobei die textile Schicht ein- oder beidseitig mit einer Kunststoff-Beschichtung (2) insbesondere einer Folie versehen ist,
- wobei der Verbundwerkstoff (1) im Scharnierbereich längs des Scharniers mindestens eine ein- oder zweifache Faltung (3) bildet, bei der das Flachmaterial ein- oder zweifach mit einer oder beiden Seitenflächen aufeinander liegt,
- wobei im Bereich der Faltung (3) die Flächen der Beschichtung (2) insbesondere die Folienflächen aufeinander liegen und durch vorherige oder nachträgliche Zufuhr von Wärme aneinander geschmolzen sind,
- wobei der eigenverstärkte thermoplastische Verbundwerkstoff (1) mehrere übereinander liegende Lagen aus thermoplastischem Polypropylen oder Polyester aufweist, wobei Lagen aus homogener Polypropylenfolie, copolymerhaltiger Polyolefinfolie, homogener Polyesterfolie oder copolymerhaltiger Polyesterfolie mit Verstärkungslagen abwechseln, bei denen entweder das Polypropylen oder der Polyester band-, faserförmig oder fadenförmig ist, oder bei denen die Verstärkungslagen Polypropylen-, bzw. Polyester-Bänder und/oder Polypropylen-, bzw. Polyester-Fasern und/oder Polypropylen-, bzw. Polyester-Fäden aufweisen, **dadurch gekennzeichnet, dass** die Kunststoff-Beschichtung (2) einen niedrigeren Schmelzpunkt aufweist, als der der textilen Schicht.

2. Airbag-Abdeckung nach Anspruch 1, **dadurch gekennzeichnet, dass** der Kunststoff der Beschichtung unter 160° Celsius vorzugsweise bei 125° bis 155° Celsius und der Kunststoff des Gewebes über 160° Celsius vorzugsweise ab 165° Celsius schmilzt.

3. Airbag-Abdeckung nach Anspruch 1 oder 2, **dadurch gekennzeichnet, dass** der Verbundwerkstoff (1) eine Dicke von 0,4 bis 2 mm vorzugsweise von 0,8 bis 1,0 mm und die Kunststoff-Beschichtung (2) eine Dicke von 0,02 bis 0,1 mm vorzugsweise von 0,03 bis 0,06 mm aufweist.

4. Airbag-Abdeckung nach einem der vorherigen Ansprüche, **dadurch gekennzeichnet, dass** die Faltung V- oder N-förmig ist.

5. Airbag-Abdeckung nach einem der vorherigen Ansprüche, **dadurch gekennzeichnet, dass** die längs des Scharniers (3) verlaufenden schmalen länglichen Faltflächen bzw. Faltlagen der Faltung eng aneinander liegen ohne Zwischenraum zwischen den Faltflächen bzw. Faltlagen.

6. Airbag-Abdeckung nach einem der vorherigen Ansprüche, **dadurch gekennzeichnet, dass** die Faltflächen/Faltlagen zueinander parallel liegen.

7. Airbag-Abdeckung nach einem der vorherigen Ansprüche, **dadurch gekennzeichnet, dass** die Bänder, Fasern oder Fäden aus Polypropylen oder Polyester in den Verstärkungslagen ein Gewebe bilden.

8. Airbag-Abdeckung nach einem der vorherigen Ansprüche, **dadurch gekennzeichnet, dass** die Bänder und/oder Fasern in den Verstärkungslagen ungeordnet kreuz und quer angeordnet sind.

9. Airbag-Abdeckung nach einem der vorherigen Ansprüche, **dadurch gekennzeichnet, dass** die Beschichtung (2) insbesondere die Folie aus Polypropylen, copolymeren Polyolefin oder Polyester besteht.

10. Airbag-Abdeckung nach einem der vorherigen Ansprüche, **dadurch gekennzeichnet, dass** im Material der Abdeckung zwei Klappen als Doppelklappe angeordnet sind und zu beiden Seiten der Doppelklappe jeweils ein Scharnier besteht mit jeweils mindestens einer längs des Scharniers verlaufenden Faltung.

## Claims

1. Airbag cover that consists of a composite material (1) in the form of sheet material with at least one textile layer, where the cover forms at least one flap with hinge,
- where one side or both sides of the textile layer has/have a plastics coating (2), in particular a film,
- where the composite material (1) in the hinge region along the hinge forms at least one single or double fold (3), where there is/are one or two instance(s) where the sheet material has one or both sides in contact with one another,
- where in the region of the fold (3) the areas of the coating (2), in particular the film areas, are in contact with one another and, by virtue of prior or subsequent introduction of heat, have been melted onto one another,
- where the self-reinforced thermoplastic composite material (1) has a plurality of mutually superposed layers made of thermoplastic polypropylene or polyester, where layers made of homogeneous polypropylene film, of copolymer-containing polyolefin film, of homogeneous polyester film or of copolymer-containing polyester film alternate with reinforcement layers, where either the polypropylene or the polyester takes the form of strips, of fibers or of threads, or where the reinforcement layers comprise polypropylene/polyester strips and/or polypropylene/polyester fibers and/or polypropylene/polyester threads, **characterized in that** the melting point of the plastics coating (2) is lower than that of the textile layer.

2. Airbag cover according to Claim 1, **characterized in that** the plastic of the coating melts below 160° Celsius, preferably at from 125° to 155° Celsius, and the plastic of the woven fabric melts above 160° Celsius, preferably at or above 165° Celsius.

3. Airbag cover according to Claim 1 or 2, **characterized in that** the thickness of the composite material (1) is from 0.4 to 2 mm, preferably from 0.8 to 1.0 mm, and the thickness of the plastics coating (2) is from 0.02 to 0.1 mm, preferably from 0.03 to 0.06 mm.

4. Airbag cover according to any of the preceding claims, **characterized in that** the fold is V-shaped or N-shaped.

5. Airbag cover according to any of the preceding claims, **characterized in that** the narrow elongate folded areas or folded layers which constitute the fold and run along the hinge (3) are in close contact with one another with no intervening space between the folded areas or folded layers.

6. Airbag cover according to any of the preceding claims, **characterized in that** the folded areas/folded layers are parallel to one another.

7. Airbag cover according to any of the preceding claims, **characterized in that** the strips, fibers or threads made of polypropylene or polyester in the reinforcement layers form a woven fabric.

8. Airbag cover according to any of the preceding claims, **characterized in that** the arrangement of the strips and/or fibers in the reinforcement layers is unordered, with random orientation.

9. Airbag cover according to any of the preceding claims, **characterized in that** the coating (2), in particular the film, is composed of polypropylene, of copolymeric polyolefin or of polyester.

10. Airbag cover according to any of the preceding claims, **characterized in that** in the material of the cover there are two flaps arranged as double flap and on both sides of the double flap there is in each case a hinge with in each case at least one fold running along the hinge.

## Revendications

1. Couvercle de coussin de sécurité, qui est constitué par un matériau composite (1) sous la forme d'un matériau plat comprenant au moins une couche textile, le couvercle formant au moins un rabat muni d'une charnière,
- la couche textile étant munie sur l'un des ou les deux côtés avec un revêtement en plastique (2), notamment un film,
- le matériau composite (1) formant au moins un pli simple ou double (3) dans la zone de charnière le long de la charnière, dans lequel le matériau plat est superposé une ou deux fois avec l'une des ou les deux surfaces latérales,
- dans la zone du pli (3), les surfaces du revêtement (2), notamment les surfaces du film, étant superposées et étant fondues les unes sur les autres par apport de chaleur préalable ou ultérieur,
- le matériau composite thermoplastique auto-renforcé (1) comprenant plusieurs couches superposées en polypropylène thermoplastique ou polyester, des couches en un film de polypropylène homogène, un film de polyoléfine contenant un copolymère, un film de polyester homogène ou un film de polyester contenant un copolymère alternant avec des couches des renforcement, le polypropylène ou le polyester étant sous la forme de bandes, de fibres ou de fils, ou les couches de renforcement comprenant des bandes de polypropylène ou de polyester et/ou des fibres de polypropylène ou de polyester et/ou des fils de polypropylène ou de polyester, **caractérisé en ce que** le revêtement en plastique (2) présente un point de fusion plus faible que celui de la couche textile.

2. Couvercle de coussin de sécurité selon la revendication 1, **caractérisé en ce que** le plastique du revêtement fond en dessous de 160 °C, de préférence à une température de 125 à 155 °C, et le plastique du tissu fond à une température supérieure à 160 °C, de préférence à partir de 165 °C.

3. Couvercle de coussin de sécurité selon la revendication 1 ou 2, **caractérisé en ce que** le matériau composite (1) présente une épaisseur de 0,4 à 2 mm, de préférence de 0,8 à 1,0 mm, et le revêtement en plastique (2) présente une épaisseur de 0,02 à 0,1 mm, de préférence de 0,03 à 0,06 mm.

4. Couvercle de coussin de sécurité selon l'une quelconque des revendications précédentes, **caractérisé en ce que** le pli est en forme de V ou de N.

5. Couvercle de coussin de sécurité selon l'une quelconque des revendications précédentes, **caractérisé en ce que** les surfaces de pli ou les couches de pli longitudinales étroites le long de la charnière (3) sont disposées étroitement les unes à côté des autres sans espace intermédiaire entre les surfaces de pli ou les couches de pli.

6. Couvercle de coussin de sécurité selon l'une quelconque des revendications précédentes, **caractérisé en ce que** les surfaces de pli/couches de pli sont parallèles les unes aux autres.

7. Couvercle de coussin de sécurité selon l'une quelconque des revendications précédentes, **caractérisé en ce que** les bandes, les fibres ou les fils en polypropylène ou polyester forment un tissu dans les couches de renforcement.

8. Couvercle de coussin de sécurité selon l'une quelconque des revendications précédentes, **caractérisé en ce que** les bandes et/ou les fibres sont agencées en désordre dans tous les sens dans les couches de renforcement.

9. Couvercle de coussin de sécurité selon l'une quelconque des revendications précédentes, **caractérisé en ce que** le revêtement (2), notamment le film, est constitué par un polypropylène, une polyoléfine copolymère ou un polyester.

10. Couvercle de coussin de sécurité selon l'une quelconque des revendications précédentes, **caractérisé en ce que** deux rabats sont agencés sous la forme d'un rabat double dans le matériau du couvercle, et une charnière est disposée sur chacun des deux côtés du rabat double, avec à chaque fois au moins un pli le long de la charnière.
